# EUROPÄISCHE PATENTSCHRIFT

(11) **EP 1 459 929 B1**
(45) Veröffentlichungstag und Bekanntmachung des Hinweises auf die Patenterteilung: **22.08.2007**
(21) Anmeldenummer: 04003244.3
(22) Anmeldetag: 13.02.2004
(51) Int. Cl.: B60K 31/04

(54) **Vorrichtung zum Beschleunigen und/oder Verzögern eines Kraftfahrzeugs und Verfahren zur Einstellung der Geschwindigkeit eines Kraftfahrzeugs**
Apparatus for acceleration and/or deceleration of a vehicle and method for controlling speed of a vehicle
Appareil pour d'accélération et de décélération d'un vehicule et méthode de commande de vitesse d'un vehicule

(30) Priorität: 21.03.2003 DE 10312547
(43) Veröffentlichungstag der Anmeldung: 22.09.2004
(73) Patentinhaber: AUDI AG, 85045 Ingolstadt (DE)
(72) Erfinder: Mäusbacher, Bernhard, 85080 Gaimersheim (DE); Landsiedel, Thomas, 85110 Kipfenberg (DE)
(74) Vertreter: Thielmann, Frank

(56) Entgegenhaltungen:
- DE-A1- 4 404 594
- DE-A1- 10 064 307
- DE-A1- 19 811 268

## Beschreibung

Die Erfindung betrifft eine Vorrichtung zum Beschleunigen und/oder Verzögern eines Kraftfahrzeugs und ein Verfahren zur Einstellung der Geschwindigkeit eines Kraftfahrzeugs.

Eine Anlage zum Beschleunigen oder Verzögern eines Kraftfahrzeugs wird üblicherweise derart gesteuert, dass der Fahrer die Geschwindigkeit des Kraftfahrzeugs direkt regelt, indem er den Volumenstrom des Kraftstoffs für den Motor mittels eines Gaspedals und den Radbremsdruck mittels eines Bremspedals einstellt. Gaspedal und Bremspedal sind in der Regel als Fußpedale ausgestaltet. Das Wirkprinzip dieser Fußpedale besteht im Durchlaufen eines Schwenkweges infolge eines Betätigungsdrucks auf das Pedal. Aus diesem Pedalweg wird bei Pedalen, die mechanisch von der Aktorik der Anlage entkoppelt sind, ein Signal erzeugt, das zur Steuerung der Antriebsbeziehungsweise Bremsanlage weitergeleitet wird.

Die Verwendung von Pedalen bringt eine Reihe von Nachteilen mit sich. Beispielsweise stellen Fußpedale, die in den Fußraum des Fahrers hineinragen ein erhöhtes Verletzungsrisiko für den Fahrer des Kraftfahrzeugs dar, da diese im Crashfall in den Fußraum hineinschwenken können. Weiterhin entsteht durch den Betätigungsweg des Pedals eine längere Schwellzeit bis zum vollen Einsatz der Bremskraft oder der Beschleunigung. Ebenfalls ist bei Fußpedalen nachteilig, dass wenn der Fahrer seine Sitzposition falsch wählt, er in Notsituationen nicht in der Lage ist das Pedal entsprechend weit zu treten.

In der nicht vorveröffentlichten DE 102 39 913 A1 wird daher ein Betätigungsmittel zum Beeinflussen einer Anlage zum Bremsen, Kuppeln oder Antreiben eines Kraftfahrzeugs vorgeschlagen, das mechanisch von der Aktorik der Anlage entkoppelt ist und ein ausschließlich die Betätigungskraft Erzeugung von einem Betätigungsweg unabhängig ist und keinen Betätigungsweg hat. Hierbei dient das Betätigungsmittel bei einer Antriebsanlage dem Erfassen eines Fahrergeschwindigkeitswunsches, gemäß dem Motorsteuergeräte angesteuert werden. Das Betätigungsmittel dient bei einer Bremsanlage zum Erfassen eines Fahrerbremswunsches, der in elektrische Steuersignale für Bremssteuergeräte gewandelt wird.

Der Nachteil dieses Betätigungsmittels liegt darin, dass die Betätigungskraft auf das Betätigungsmittel entweder zur Erzeugung eines Signals zur Ansteuerung des Antriebs oder zur Ansteuerung der Bremsen verwendet wird. Hierdurch können sich wiedersprechende Steuersignale nicht erkannt werden und es kann zu einem ruckhaften Fahrverhalten kommen.

Die DE 44 04 594 A1 betrifft eine Bedieneinrichtung zum Lenken, Beschleunigen oder Abbremsen eines Kraftfahrzeugs. Dazu weist die Bedieneinrichtung ein Bedienelement auf, welches in mindestens zwei Raumrichtungen relativ zum Kraftfahrzeug verstellbar ist. Vorzugsweise umfasst die Bedieneinrichtung auch eine Betätigungskraft-Stelleinrichtung, mit der die zum Verstellen des Bedienelements benötigte Betätigungskraft wenigstens bezüglich eines Verstell-Freiheitsgrads in Abhängigkeit von einem aktuellen Fahrzeugstand des Kraftfahrzeugs variiert werden kann. DE-A-19811268 zeigt die Merkmale des Oberbegriffs des Anspruchs 1.

Aufgabe der vorliegenden Erfindung ist es daher, eine Vorrichtung zum Beschleunigen oder Verzögern eines Kraftfahrzeugs und ein Verfahren zum Einstellen der Geschwindigkeit eines Kraftfahrzeugs zu schaffen, wobei der Fahrkomfort erhöht werden soll, gleichzeitig die Flexibilität der Vorrichtung gesteigert werden soll und die Gestaltung eines crash-optimierten Fußraums ermöglicht und der Anhalteweg verkürzt werden soll.

Diese Aufgabe wird durch eine Vorrichtung zum Beschleunigen oder Verzögern eines Kraftfahrzeugs gemäß dem Anspruch 1 und ein Verfahren zur Einstellung der Geschwindigkeit eines Kraftfahrzeugs gemäß dem Anspruch 11 gelöst.

Eine erfindungsgemäße Vorrichtung ist dadurch gekennzeichnet, dass jedes der beiden Betätigungselemente dazu ausgelegt ist, aufgrund einer von einem Fahrer auf das jeweilige Betätigungselement wegfrei aufgebrachten Betätigungskraft einen Fahrerwunsch bezüglich einer Beschleunigung oder einer Verzögerung des Kraftfahrzeugs zu ermitteln.

Die Betätigungselemente können über Hand- oder Fußkraft bedient werden.

Durch das Vorsehen von wegfrei arbeitenden Betätigungselementen wird es zum einen möglich, diese frei innerhalb des Fußraumes zu positionieren und es entfällt jegliche mechanische Anbindung an die Aktorik, so dass keine Pedale mehr in den Fußraum des Kraftfahrzeugs hineinschwenken können. Hierdurch kann der Fußraum crash-optimiert ausgestaltet werden. Weiterhin verkürzt sich durch die wegfrei arbeitenden Betätigungselemente der Anhalteweg des Kraftfahrzeugs, da die bei einer Notbremsung erforderliche Betätigungskraft schneller auf das entsprechende Betätigungselement aufgebracht werden kann. Schließlich verbessern die wegfrei arbeitenden Betätigungselemente für den Fahrer des Kraftfahrzeugs die Ergonomie, da die Hand- oder Fußposition beim Beschleunigen bzw. beim Verzögern des Kraftfahrzeugs grundsätzlich nicht mehr verändert werden muss.

Zugleich wird durch die gleichzeitige Berücksichtigung der Betätigungskräfte, die auf beide Betätigungselemente aufgebracht werden, die Möglichkeit gegeben, den Fahrkomfort und die Flexibilität der Vorrichtung weiter zu steigern. Insbesondere bei wegfrei arbeitenden Betätigungselementen ist diese gleichzeitige Berücksichtigung von Brems- und Beschleunigungswunsch des Fahrers wesentlich, um beispielsweise eine versehentliche Betätigung eines der Betätigungselemente ausgleichen zu können. Auch eine gewollte gleichzeitige Betätigung der beiden Betätigungselemente kann durch die erfindungsgemäße Ausgestaltung der Vorrichtung in einen einheitlichen Fahrerbeschleunigungs- oder Verzögerungswunsch umgewandelt werden, wodurch sich der Fahrkomfort erheblich erhöht.

Vorzugsweise umfasst die Vorrichtung hierzu zumindest eine Kombinationseinheit, in der die aus den Betätigungskräften auf die beiden Betätigungselemente ermittelten Signale für den Beschleunigungs- oder Verzögerungswünsche miteinander verarbeitet werden. Die Kombinationseinheit kann eine separate Einheit darstellen oder als ein Glied einer Verarbeitungseinheit ausgestaltet sein.

Gemäß einer Ausführungsform stellt die Kombinationseinheit eine Additionseinheit dar. Durch Summenbildung aus Signalen, die aus den Betätigungskräften auf beide Betätigungselemente ermittelt wurden, kann die vom Fahrer tatsächlich gewünschte Beschleunigung oder Verzögerung ermittelt werden und ausschließlich die zur Einstellung dieser Beschleunigung oder Verzögerung notwendigen Anlagen, wie Bremse oder Motor, angesteuert werden. Zusätzlich können in der Kombinationseinheit auch Signale berücksichtigt werden, die beispielsweise von Fahrerassistenzsystemen ausgegeben werden und ein Beschleunigungs- oder Verzögerungssignal darstellen.

Alternativ oder zusätzlich kann die Kombinationseinheit als Priorisierungseinheit ausgebildet sein. Somit kann in der Kombinationseinheit einem Signal der Vorrang vor einem anderen Signal gegeben werden. Die Priorisierung wird in der Regel aufgrund des Ursprungs des Signals getätigt. Wird beispielsweise ein Signal empfangen, das von einem Fahrerassistenzsystem stammt, so wird dieses im Vergleich zu den Signalen, die durch die Betätigung der Betätigungsmittel erzeugt wurden, nachrangig behandelt. Zusätzlich oder alternativ kann in der Priorisierungseinheit dem Bremssignal, das durch Betätigung des Betätigungselements zum Verzögern des Kraftfahrzeugs erzeugt wurde, der Vorrang vor einem Beschleunigungssignal, das durch die Betätigung des Betätigungselements zum Beschleunigen des Kraftfahrzeugs erzeugt wurde, gegeben werden. Wird ein Beschleunigungssignal erkannt, so kann durch die Kombinationseinheit festgelegt werden, dass dieses nur dann als ein Sollwertsignal von dieser ausgegeben wird, wenn nicht auch ein Verzögerungssignal vorliegt.

Die Signale, die von den Betätigungselementen an die Kombinationseinheit geleitet werden, werden vorzugsweise durch Signalerfassungselemente erzeugt, die den Betätigungselementen zugeordnet sind. Die Signalerfassungselemente werden vorzugsweise in einer mit den Signalverfassungselementen verbundenen Signalverarbeitungseinheit weiter verarbeitet.

Die Signalverarbeitungseinheit umfasst vorzugsweise die Kombinationseinheit und zumindest ein der Kombinationseinheit vorgeschaltetes Signalverarbeitungsglied. Das Signalverarbeitungsglied dient insbesondere der Umwandlung der durch die Signalerfassungselemente erfassten Signale, die in der Regel elektrische Spannungssignale darstellen, in Beschleunigungs- bzw. Verzögerungssignale. Diese Beschleunigungs- bzw. Verzögerungssignale können anhand von Kennlinien bestimmt werden und gegebenenfalls optimiert werden, bevor sie der Kombinationseinheit zugeführt werden. Hierdurch kann ein sicheres Betreiben der Vorrichtung gewährleistet werden.

Insbesondere kann die Kennlinie, anhand derer die Umwandlung vorgenommen wird, beispielsweise einen Kraftschwellenwert aufweisen, der überschritten werden muss, bevor ein Beschleunigungs- bzw. Verzögerungssignal ausgegeben wird. Bei einer Kombinationseinheit, die als Priorisierungseinheit ausgebildet ist, kann sich die Kraftschwelle für das Verzögerungssignal von der Kraftschwelle für das Beschleunigungssignal unterscheiden oder es kann vorgesehen werden, dass nur bei gleichzeitiger Betätigung des Beschleunigungs- und Verzögerungspedals die Kraftschwelle für das Verzögerungssignal einen niedrigeren Wert aufweist. Der Schwellenwert wird auch als Betätigungssuchkraft bezeichnet.

In einer Ausführungsform umfasst die Vorrichtung eine Reglereinheit, die der Kombinationseinheit nachgeschaltet ist. Da in der Kombinationseinheit die Signale bezüglich des Beschleunigungswunsches und des Verzögerungswunsches miteinander verarbeitet werden, kann von dieser ein Fahrerbeschleunigungswunsch ausgegeben werden. Wird in der Kombinationseinheit eine Fahrerwunschbeschleunigung ermittelt, die Null beträgt, so beabsichtigt der Fahrer die Geschwindigkeit konstant zu halten. In diesem Fall kann die Beschleunigung beziehungsweise die Verzögerung geregelt werden. Vorzugsweise umfasst die Reglereinheit aber einen bei Fahrerwunschbeschleunigung Null zugeschalteten Geschwindigkeitsregler, vorzugsweise einen PI-Geschwindigkeitsregler. Der Geschwindigkeitsreglerausgang schaltet einen Offset auf die Fahrerwunschbeschleunigung. Ist der Ausgang der Kombinationseinheit ungleich Null, so wird die vorliegende Fahrerwunschbeschleunigung eingestellt. Die Einstellung der Fahrerwunschbeschleunigung kann durch steuern oder regeln erfolgen.

Als Reset-Bedingung für den Regler kann insbesondere die Ausgabe der Kombinationseinheit dienen. Vorzugsweise wird als Reset-Bedingung für den I-Anteil des PI-Reglers der Übergang der Fahrerwunschbeschleunigung, die von der Kombinationseinheit ausgegeben wird, auf 0m/s² eingesetzt.

In einer bevorzugten Ausführungsform umfasst die Reglereinheit eine Logikeinheit zur Ermittlung der Motoranforderung und der Bremsanforderung. In der Logikeinheit können insbesondere Einflüsse, die von der Betätigungskraft auf die Betätigungselemente unabhängig sind und eine Beschleunigung, oder Verzögerung des Kraftfahrzeugs hervorrufen, berücksichtigt werden. Als mögliche Einflüsse kommen das Motorschleppmoment, die Fahrbahnsteigung und andere Fahrtwiderstände in Betracht.

Das erfindungsgemäße Verfahren zur Einstellung der Geschwindigkeit eines Kraftfahrzeugs ist dadurch gekennzeichnet, dass zur Ermittlung eines Fahrerwunsches eine von einem Fahrer auf das jeweilige Betätigungselement wegfrei aufgebrachte Betätigungskraft ermittelt wird, daraus ein Signal über den Fahrerwunsch bezüglich der Beschleunigung oder der Verzögerung erzeugt wird und die Signale bezüglich der Fahrerwünsche miteinander verarbeitet werden.

Die Verarbeitung der Signale bezüglich der Fahrerwünsche kann eine Summenbildung aus den ermittelten Signalen oder eine Überprüfung des Vorliegens eines Verzögerungssignals beim Vorliegen eines Beschleunigungssignals sein. Im letzteren Fall, kann bei gleichzeitigem Vorliegen beider Signalarten, dem Verzögerungssignal der Vorrang gegeben werden.

Zusätzlich zu den Signalen, die aus der Betätigungskraft auf die Betätigungselemente erzeugt wurden, können auch Signale weiterer Einrichtungen des Kraftfahrzeugs berücksichtigt werden. Hierbei können beispielsweise in einer Kombinationseinheit auch Signale, die von Fahrerassistenzsystemen, wie einem Adaptive Cruise Control ACC, ausgegeben werden und beispielsweise ein Verzögerungssignal darstellen, berücksichtigt werden. In der Regel wird den Signalen, die von einem der Betätigungselemente erzeugt wurden, der Vorrang vor solchen Fahrerassistenzsignalen gegeben. Liegen aber beispielsweise keine Signale von den Betätigungselemente vor, so kann ein der Kombinationseinheit nachgeschalter Regelkreis die Geschwindigkeit beziehungsweise die Beschleunigung oder Verzögerung entsprechend dem Fahrerassistenzsignal regeln.

Wird eine Fahrerwunschbeschleunigung von Null ermittelt, so kann die Geschwindigkeit des Kraftfahrzeugs in Abhängigkeit von der zuletzt aufgebrachten Betätigungskraft auf eines der beiden Betätigungselemente konstant gehalten werden. Hierzu kann insbesondere ein der Kombinationseinheit nachgeschalteter Geschwindigkeitsregler dienen.

Die Merkmale und Vorteile, die bezüglich des Verfahrens beschrieben werden gelten entsprechend und soweit anwendbar auch für die Vorrichtung und umgekehrt.

Die Erfindung wird im folgenden anhand von Figuren näher erläutert. Es zeigen:
Figur 1: eine schematische Darstellung einer Ausführungsform einer Vorrichtung zum Beschleunigen oder Verzögern eines Kraftfahrzeugs gemäß der vorliegenden Erfindung;
Figur 2: eine schematische Darstellung einer weiteren Ausführungsform einer Vorrichtung zum Beschleunigen oder Verzögern eines Kraftfahrzeugs gemäß der vorliegenden Erfindung, und
Figur 3: einen möglichen Verlauf einer optimierten Kennlinie, wie sie bei der erfindungsgemäßen Vorrichtung angewendet werden kann.

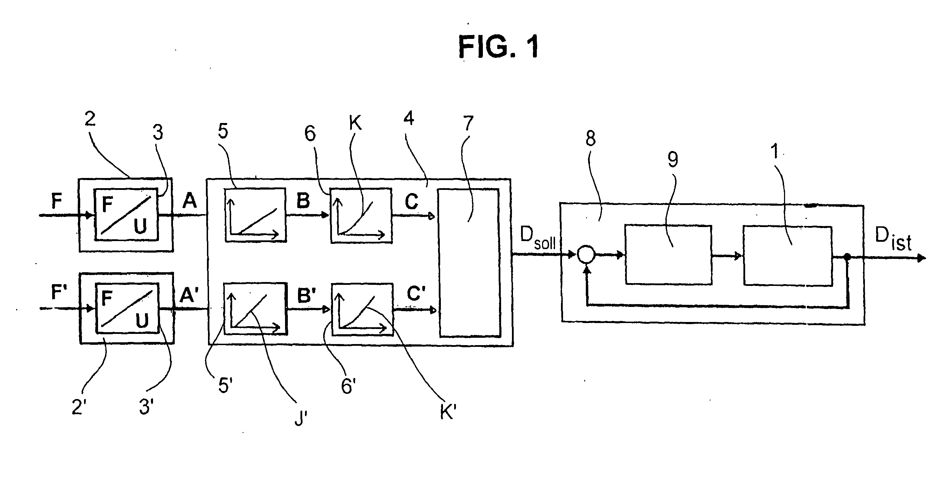

Die in Figur 1 gezeigte Vorrichtung zum Beschleunigen oder Verzögern eines Kraftfahrzeugs 1 weist zwei Betätigungselemente 2, 2' auf. Diese Betätigungselemente 2, 2' sind in der Praxis als Handbetätigungen oder Fußbetätigungen ausgestaltet, wobei das erste Betätigungselement 2 zum Beschleunigen und das zweite Betätigungselement 2' zum Verzögern des Kraftfahrzeugs 1 dient.

Die beiden Betätigungselemente 2, 2' sind von der Aktorik zum Beschleunigen oder zum Verzögern des Kraftfahrzeugs mechanisch entkoppelt, stehen aber elektrisch damit in Verbindung. Die Betätigung der Betätigungselemente 2, 2' erfolgt weitestgehend wegfrei, das heißt ohne eine für den Fahrer des Kraftfahrzeugs 1 spürbare Veränderung der Stellung der Betätigungselemente 2, 2'. Hierzu umfassen das erste Betätigungselement 2 und das zweite Betätigungselement 2' in der dargestellten Ausführungsform jeweils ein Signalerfassungsglied 3, 3', wie beispielsweise einen piezokeramischen Kraftaufnehmer, Dehnungsmessstreifen oder Drehmomentenaufnehmer, die auch redundant ausgeführt sein können. Durch das Signalerfassungsglied 3, 3' wird eine vom Fahrer des Kraftfahrzeugs 1 bei Betätigung des ersten oder zweiten Betätigungselements 2, 2' aufgebrachte Hand- oder Fußkraft F, F' erfasst und proportional dazu in ein elektrisches Spannungssignal A, A' umgewandelt. Dabei können innerhalb der Betätigungselemente 2, 2' und/oder innerhalb der Signalerfassungsglieder 3, 3' auch Plausibilitätsbetrachtungen der Ein- und Ausgangssignale durchgeführt werden.

Nachfolgend ist dem ersten und zweiten Betätigungselement 2, 2' eine Einrichtung zur Signalverarbeitung 4 mit ersten Signalverarbeitungsgliedern 5, 5', zweiten Signalverarbeitungsgliedern 6, 6' sowie einer Kombinationseinheit 7 zugeordnet.

Das erste Signalverarbeitungsglied 5, 5' wandelt das elektrische Spannungssignal A, A' des Signalerfassungsgliedes 3, 3' anhand einer ersten Kennlinie J, J' in ein Beschleunigungs- oder Verzögerungssignal B, B' um.

Das zweite Signalverarbeitungsglied 6, 6' wandelt das Beschieunigungs- oder Verzögerungssignal B, B' des ersten Signalverarbeitungsgliedes 5, 5' anhand einer zweiten optimierten Kennlinie K, K' in ein optimiertes Beschleunigungs- bzw. Verzögerungssignal C, C' um.

Grundsätzlich könnten die ersten und zweiten Signalverarbeitungsglieder 5 und 6 bzw. 5' und 6' aber auch zu jeweils einem Signalerfassungsglied 5+6 bzw. 5'+6' zusammengefasst sein, so dass dementsprechend auch die beiden Kennlinien J und K bzw. J' und K' zu einer optimierten Kennlinie zusammengefasst wären.

Die optimierten Beschleunigungs- und Verzögerungssignale C, C' werden anschließend in der Kombinationseinheit 7 zusammengeführt. In dieser Kombinationseinheit 7 wird in der dargestellten Ausführungsform ein Sollwertsignal Dₛₒₗₗ generiert, das zum Beschleunigen oder Verzögern des Kraftfahrzeugs 1 ausgegeben wird. Dabei bewirkt die Kombinationseinheit 7, dass das aus dem optimierten Beschleunigungs- und Verzögerungssignal C, C' generierte Sollwertsignal Dₛₒₗₗ für die Beschleunigung bzw. Verzögerung des Kraftfahrzeugs 1 bei einer vollständigen Wegnahme der auf das erste oder zweite Betätigungselement 2, 2' aufgebrachten Betätigungskraft F, F' auf Null gesetzt wird, was dem Wunsch nach Konstanthalten der Geschwindigkeit entspricht. Zudem kann in der dargestellten Ausführungsform die Kombinationseinheit 7 bewirken, dass ein optimiertes Beschleunigungssignal C sicherheitshalber nur dann als Sollwertsignal Dₛₒₗₗ ausgegeben wird, wenn kein optimiertes Verzögerungssignal C' vorliegt.

Das Sollwertsignal Dₛₒₗₗ der Beschleunigung bzw. Verzögerung wird daraufhin einer Regeleinrichtung 8 der Beschleunigung oder Verzögerung des Kraftfahrzeugs 1 zugeführt. Die Regeleinrichtung 8 umfasst in der dargestellten Ausführungsform einen Regler 9 und regelt die Beschleunigung bzw.

Verzögerung anhand des vom Kraftfahrzeug 1 erreichten Ist-Wertsignal Dᵢₛₜ der Beschleunigung nach.

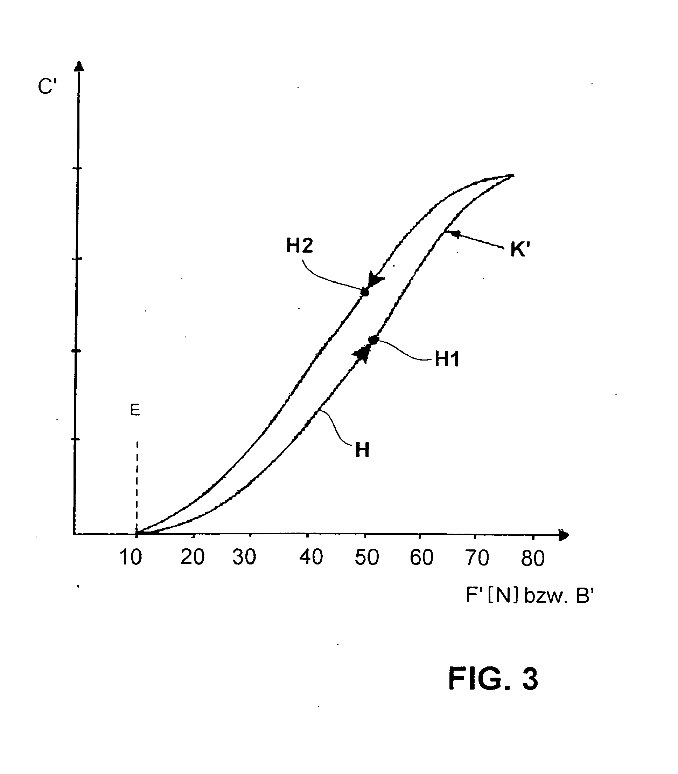

Beispielhaft für das zweite Betätigungselement 2', das zum Verzögern des Kraftfahrzeugs 1 dient, ist bei der in Figur 3 gezeigten Darstellung eine optimierte Kennlinie K' gezeigt, wobei die Hand- oder Fußkraft F' bzw. das Verzögerungssignal B' auf der Ordinate und das optimierte Verzögerungssignal C' auf der Abzisse aufgetragen ist.

Die optimierte Kennlinie K' weist eine Hysterese H auf. Dabei ist der ansteigende erste Zweig H1 der Hystereseschleife gegenüber dem abfallenden zweiten Zweig H2 der Hystereseschleife ähnlich ausgebildet, jedoch zu geringeren Werten des Verzögerungssignals B' versetzt. Aufgrund der Hysterese H der optimierten Kennlinie K' zeigt die Vorrichtung zum Beschleunigen oder Verzögern eines Kraftfahrzeugs 1 besondere Komfortmerkmale.

In ihrem unteren Bereich zeigt die optimierte Kennlinie K' bis zu einem Schwellenwert E von beispielsweise 10 Newton, der auch als Betätigungssuchkraft bezeichnet wird, kein optimiertes Verzögerungssignal C', so dass über die zweite Betätigungseinrichtung 2' auch keine Ansteuerung der Vorrichtung zum Beschleunigen oder Verzögern des Kraftfahrzeugs 1 erfolgt. Erst oberhalb des Schwellenwertes E wird ein optimiertes Verzögerungssignal C' ausgegeben und die Vorrichtung angesteuert.

Die optimierte Kennlinie K' ist jedoch nicht nur beim zweiten Betätigungselement 2' zum Verzögern des Kraftfahrzeugs 1, sondern natürlich auch beim ersten Betätigungselement 2 zum Beschleunigen des Kraftfahrzeugs 1 vorteilhaft einsetzbar. Denn auch dort ist eine Hystere H und ein Schwellenwert E sinnvoll.

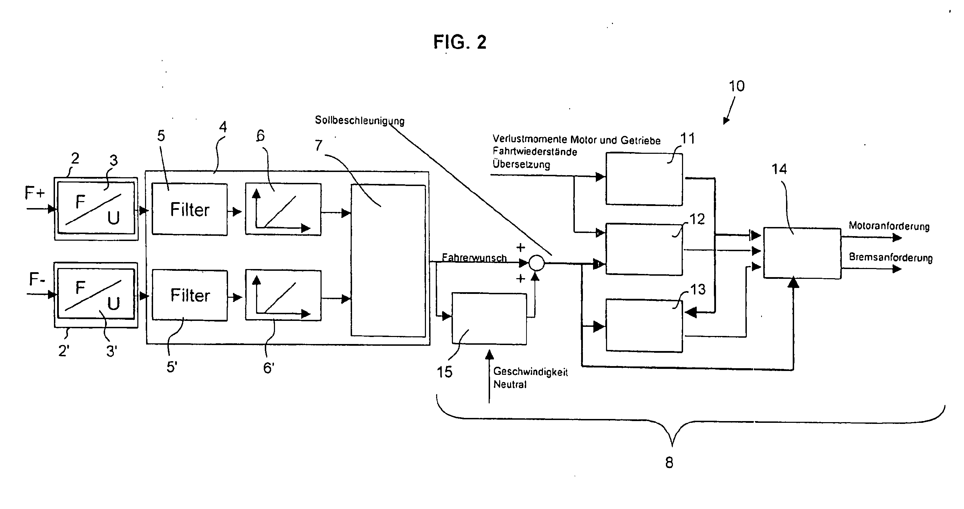

In Figur 2 ist eine weitere Ausführungsform der erfindungsgemäßen Vorrichtung zum Beschleunigen und/oder Verzögern des Kraftfahrzeugs dargestellt.

Auch in dieser Ausführungsform weist die Vorrichtung zum Beschleunigen oder Verzögern eines Kraftfahrzeugs zwei Betätigungselemente 2, 2' auf, wobei das erste Betätigungselement 2 zum Beschleunigen und das zweite Betätigungselement 2' zum Verzögern des Kraftfahrzeugs 1 dient.

Die beiden Betätigungselemente 2, 2' sind, wie bei der Ausführungsform in Figur 1, von der Aktorik zum Beschleunigen oder zum Verzögern des Kraftfahrzeugs mechanisch entkoppelt, stehen aber elektrisch damit in Verbindung und die Betätigung der Betätigungselemente 2, 2' erfolgt weitestgehend wegfrei. Das erste Betätigungselement 2 und das zweite Betätigungselement 2' umfassen in der dargestellten Ausführungsform jeweils ein Signalerfassungsglied 3, 3', wie beispielsweise einen piezokeramischen Kraftaufnehmer, Dehnungsmessstreifen oder Drehmomentenaufnehmer, die auch redundant ausgeführt sein können. Durch das Signalerfassungsglied 3, 3' wird eine vom Fahrer des Kraftfahrzeugs 1 bei Betätigung des ersten oder zweiten Betätigungselements 2, 2' aufgebrachte Hand- oder Fußkraft F, F' erfasst und proportional dazu in ein elektrisches Spannungssignal A, A' umgewandelt. Dabei können innerhalb der Betätigungselemente 2, 2' und/oder innerhalb der Signalerfassungsglieder 3, 3' auch Plausibilitätsbetrachtungen der Ein- und Ausgangssignale durchgeführt werden.

In der dargestellten Ausführungsform ist den Signalerfassungsgliedern 3, 3' jeweils als erstes Signalverarbeitungsglied 5, 5' der Signalverarbeitungseinheit 4 ein Filter nachgeschaltet, von dem aus ein gefiltertes elektrisches Spannungssignal an ein zweites Signalverarbeitungsglied 6, 6' geliefert wird. In dem zweiten Signalverarbeitungsglied 6, 6' wird anhand einer Kennlinie das elektrische Spannungssignal in ein Beschleunigungs- bzw. Verzögerungssignal umgewandelt. Die Kennlinie ist in der dargestellten Ausführungsform so gewählt, dass diese einen linearen Verlauf aufweist und einen Schwellenwert besitzt, unterhalb dessen eine Betätigungskraft als Betätigungssuchkraft angesehen wird.

Diesen beiden Verarbeitungsgliedern 6, 6' ist eine Kombinationseinheit 7 nachgeschaltet. In der Kombinationseinheit 7 wird eine Summe aus den eingehenden Beschleunigungs- bzw. Verzögerungssignalen gebildet und/oder ein Beschleunigungswunsch wird nur dann weitergeleitet, wenn kein Verzögerungswunsch vorliegt.

Der Kombinationseinheit 7 ist eine Reglereinheit 8 nachgeschaltet, die in der dargestellten Ausführungsform zumindest einen Regler 15 und eine Logikeinheit 10 umfasst. Der Regler 15, der in der dargestellten Ausführungsform einen Geschwindigkeitsregler darstellt, ist zwischen die Kombinationseinheit 7 und die Logikeinheit 10 geschaltet und wird bei Vorliegen gewisser Voraussetzungen aktiviert. Sind diese Voraussetzungen nicht erfüllt, so wird das Ausgangssignal der Kombinationseinheit 7 unmittelbar weitergeleitet.

Eine Bedingung zu der der Regler 15 aktiv ist, ist die Nicht-Betätigung der Betätigungselemente 2, 2' durch den Fahrer. In diesem Fall gibt die Kombinationseinheit 7 eine Fahrerwunschbeschleunigung von Null aus. Der Regler 15 speichert die Fahrzeuggeschwindigkeit, die beim Übergang von Betätigung des oder der Betätigungselemente 2, 2' auf Nicht-Betätigung anliegt als erstes Eingangssignal und regelt diese Geschwindigkeit mittels eines PI-Reglers ein. In der Gangstellung "Neutral", die das zweite Eingangssignal des Reglers 15 darstellt, wird der Regler 15 deaktiviert. Der Regelausgang wird der Fahrerwunschbeschleunigung überlagert, d.h. mit dieser addiert. Ist der Regler 15 aktiv, so ist die Fahrerwunschbeschleunigung gleich Null und ist der Regler 15 inaktiv, so ist der Reglerausgang gleich Null. Das Ergebnis dieser Überlagerung stellt die Sollbeschleunigung des Kraftfahrzeugs dar.

Dieser Wert der Sollbeschleunigung wird der Logikeinheit 10 zugeführt. In dieser ist in der dargestellten Ausführungsform ein Logikblock 11 für Antriebsverzögerung, ein Logikblock 12 für den Antrieb und ein Logikblock 13 für die Bremse vorgesehen. Weiterhin umfasst die Logikeinheit 10 einen Logikblock 14 für die Koordination. Der Ausgang dieser Logikeinheit 14 gibt die Motor- und Bremsanforderungen an, die an die Aktorik der Bremse oder des Motors, beispielsweise in Form von Steuersignalen für die entsprechenden Steuergeräte, geleitet werden können.

Mit dem Logikblock 11 für die Antriebsverzögerung ist mindestens eine Bestimmungseinheit (nicht dargestellt) für die Bestimmung unterschiedlicher Einflüsse verbunden. Von den Bestimmungseinheiten werden Werte für beispielsweise Fahrtwiderstände, wie den Roll- und Luftwiderstand, die Fahrzeugmasse und die Fahrbahnsteigung geliefert, wobei die beiden letztgenannten auch durch Schätzungen ermittelt werden können. Weiterhin werden Werte über Verlustmomente Motor/Getriebe und die Übersetzung bestimmt. Aus diesen Werten wird in dem Logikblock 11 für die Antriebsverzögerung die durch das Motorschleppmoment maximal mögliche Verzögerung berechnet.

Wie sich aus Figur 2 ergibt, wird der Wert der Sollbeschleunigung an die Logikblöcke für den Antrieb 12 und die Bremse 13 geleitet.

Der Logikblock für den Antrieb 12 berechnet aufgrund von Fahrtwiderständen, Verlustmomenten Motor/Getriebe, der Übersetzung und der Sollbeschleunigung die zur Einstellung dieser Sollbeschleunigung notwendige Motoranforderung. Wohingegen der Logikblock für die Bremse 13 aus der Verzögerung durch Motorschleppmoment, der Soiibeschieunigung und den Fahrtwiderständen die zur Einstellung dieser Sollbeschleunigung notwendige Bremsanforderung berechnet.

Sollte die von dem Logikblock 11 für die Antriebsverzögerung ermittelte maximale Verzögerung ausreichen um die Fahrerwunschbeschleunigung einzustellen, so schaltet die Logik-Koordination 14 den Ausgang des Logikblocks für den Antrieb 12 durch. Dies bedeutet, dass die Logikeinheit 10 nur auf den Antrieb des Kraftfahrzeugs wirkt, insbesondere diesen ansteuert. Reicht die maximale Verzögerung nicht aus, um die gewünschte Fahrzeugbeschleunigung einzustellen, so schaltet die Logik-Koordination 14 den Ausgang des Logikblocks der Bremse 13 durch, d.h. die Logikeinheit 10 wirkt nur auf die Bremse des Kraftfahrzeugs bzw. steuert diese an.

Werden im Logikblock 11 die Fahrtwiderstände oder Teile daraus nicht berücksichtigt, so werden Einflüsse, die unabhängig von der Betätigung oder Nicht-Betätigung der Betätigungselemente zu einer Beschleunigung oder Verzögerung des Kraftfahrzeugs führen, in der Reglereinheit 8 nicht mehr berücksichtigt. Die nicht berücksichtigten Fahrtwiderstände bzw. Teile daraus wirken somit und müssen vom Fahrer bzw. bei Fahrerwunschbeschleunigung Null vom Regler ausgeglichen werden.

In einer bevorzugten Ausführungsform kann der Fahrer zwischen einem Sport- und einem Komfortmodus wählen. Im Sportmodus ist der Geschwindigkeitsregler 15 immer deaktiviert. Der Fahrer muß somit zum Konstanthalten der Geschwindigkeit die Geschwindigkeit über die Betätigungselemente regeln. Der Vorteil des Sportmodus liegt in der reduzierten Anzahl der Umstiegsvorgänge, d.h. Wechseln des Fusses vom Beschleunigungs- zum Bremspedal und umgekehrt, beim Herantasten an die Fahrzeuggrenzgeschwindigkeit. Im Komfortmodus ist der Geschwindigkeitsregler nur bei Fahrerbeschleunigungswunsch Null aktiv. Bei Nichtbetätigung behält das Fahrzeug seine Geschwindigkeit bei.

Die Erfindung ist nicht auf die dargestellten Ausführungsformen beschränkt.

Mit der erfindungsgemäßen Vorrichtung können eine Anzahl von Vorteilen erzielt werden. So kann bei gleicher Fahrzeugaußenlänge die Innenraumlänge durch den Wegfall der Pedalwege um ca. 120mm gegenüber herkömmlichen Fahrzeugen verlängert werden. Dieser Längenunterschied entspricht dem Längenunterschied zu der nächst höheren Fahrzeugklasse. Wird auf einen Stufensprung, d.h. ein versetztes Anordnen der Betätigungselemente, verzichtet, so kann der Anhalteweg bei der erfindungsgemäßen Vorrichtung auf zweifache Weise verringert werden. Zum einen wird der Anhalteweg aufgrund des Verzichts des Stufensprungs und zum anderen durch den Verzicht des Pedalwegs verkürzt und somit die Sicherheit erhöht. Weiterhin kann die Vorrichtung durch Zweifußbedienung ohne Probleme betätigt werden, da das Beschleunigungs- und das Verzögerungssignal miteinander verarbeitet werden. Bei herkömmlichen Fahrzeugen besteht die Gefahr, dass bei falsch gewählter Sitzposition die notwendigen langen Pedalwege bzw. die hohen Pedalkräfte, die insbesondere für eine Notbremsung erforderlich sind, vom Fahrer nicht erreicht werden können. Bei der vorliegenden Erfindung durchlaufen die Betätigungselemente keinen Schwenkbereich. Ist der Fahrer daher in der Lage, aus seiner Sitzposition heraus eine Komfortbremsung durchzuführen, so kann er aus dieser Sitzposition heraus auch eine Notbremsung ausführen.

Eine besonders bevorzugte Ausführungsform des Sportmodus zeichnet sich dadurch aus, dass keine Geschwindigkeitsregelung während der Nichtbetätigung vorgenommen wird, aus Komfortgründen möglichst alle Einflüsse, wie Fahrtwiderstände, Rollreibung, Steigung, Masse, Motor- und Getriebeverlustmoment, berücksichtigt werden, jedoch in Untermodi ein verzicht auf Fahrtwiderstände und/oder der Steigung und/oder der Masse zur Unterstreichung der Sportlichkeit möglich ist.

Eine besonders bevorzugte Ausführungsform des Komfortmodus zeichnet sich dadurch aus, dass eine Geschwindigkeitsregelung vorhanden ist und aus Komfortgründen möglichst alle Einflüsse, wie Fahrtwiderstände, Rollreibung, Steigung, Masse, Motor- und Getriebeverlustmoment, berücksichtigt werden.

Das Merkmal der Kraftvariation, insbesondere in den drei Stufen leicht, mittel, schwer, ist sowohl mit dem Sportmodus als auch dem Komfortmodus frei kombinierbar.

## Patentansprüche

1. Vorrichtung zum Beschleunigen und/oder Verzögern eines Kraftfahrzeugs mit zwei Betätigungselementen (2, 2'), wobei das erste Betätigungselement (2) zum Beschleunigen und das zweite Betätigungselement (2') zum Verzögern des Kraftfahrzeugs dient, und wobei die beiden Betätigungselemente (2, 2') wegfrei arbeiten,
**dadurch gekennzeichnet, dass**
jedes der beiden Betätigungselemente (2, 2') dazu ausgelegt ist, aufgrund einer von einem Fahrer auf das jeweilige Betätigungselement (2, 2') wegfrei aufgebrachten Betätigungskraft einen Fahrerwunsch bezüglich einer Beschleunigung oder einer Verzögerung des Kraftfahrzeugs zu ermitteln.

2. Vorrichtung nach Anspruch 1, **dadurch gekennzeichnet, dass** die Vorrichtung zumindest eine Kombinationseinheit (7) umfasst, in der die aus den Betätigungskräften auf die beiden Betätigungselemente (2, 2') ermittelten Signale für den Beschleunigungs- oder Verzögerungswunsch miteinander verarbeitet werden.

3. Vorrichtung nach Anspruch 2, **dadurch gekennzeichnet, dass** die Kombinationseinheit (7) eine Additionseinheit darstellt.

4. Vorrichtung nach einem der Ansprüche 2 oder 3, **dadurch gekennzeichnet, dass** die Kombinationseinheit (7) eine Priorisierungseinheit darstellt.

5. Vorrichtung nach einem der Ansprüche 1 bis 4, **dadurch gekennzeichnet, dass** den Betätigungselementen (2, 2') Signalerfassungselemente (3, 3') zugeordnet sind, die mit einer Signalverarbeitungseinheit (4) verbunden sind.

6. Vorrichtung Anspruch 5, **dadurch gekennzeichnet, dass** die Signalverarbeitungseinheit (4) die Kombinationseinheit (7) und zumindest ein der Kombinationseinheit (7) vorgeschaltetes Signalverarbeitungsglied (5, 5', 6, 6') umfasst.

7. Vorrichtung nach einem der Ansprüche 1 bis 6, **dadurch gekennzeichnet, dass** diese eine Reglereinheit (8) umfasst, die der Kombinationseinheit (7) nachgeschaltet ist.

8. Vorrichtung nach Anspruch 7, **dadurch gekennzeichnet, dass** die Reglereinheit (8) einen Geschwindigkeitsregler (15), vorzugsweise einen PI-Geschwindigkeitsregler, umfasst.

9. Vorrichtung nach einem der Ansprüche 7 oder 8, **dadurch gekennzeichnet, dass** der Ausgabe der Kombinationseinheit (7) als Reset-Bedingung für den Regler (15) dienen kann.

10. Vorrichtung nach einem der Ansprüche 7 bis 9, **dadurch gekennzeichnet, dass** die Reglereinheit (8) eine Logikeinheit (10) zur Ermittlung der Motoranforderung und der Bremsanforderung umfasst.

11. Verfahren zur Einstellung der Geschwindigkeit eines Kraftfahrzeugs, das zumindest ein Betätigungselement (2, 2') zur Verzögerung und zumindest ein Betätigungselement (2, 2') zur Beschleunigung des Kraftfahrzeugs aufweist,
**dadurch gekennzeichnet, dass**
zur Ermittlung eines Fahrerwunsches eine von einem Fahrer auf das jeweilige Betätigungselement (2, 2') wegfrei aufgebrachte Betätigungskraft ermittelt wird, daraus ein Signal über den Fahrerwunsch bezüglich der Beschleunigung oder der Verzögerung erzeugt wird und die Signale bezüglich der Fahrerwünsche miteinander verarbeitet werden.

12. Verfahren nach Anspruch 11, **dadurch gekennzeichnet, dass** die Verarbeitung eine Summenbildung aus den ermittelten Signalen darstellt.

13. Verfahren nach einem der Ansprüche 11 oder 12, **dadurch gekennzeichnet, dass** bei der Verarbeitung beim Vorliegen eines Beschleunigungssignals das Vorliegen eines Verzögerungssignals überprüft wird.

14. Verfahren nach Anspruch 13, **dadurch gekennzeichnet, dass** beim Erkennen des Vorliegens eines Verzögerungssignals diesem der Vorrang vor einem Beschleunigungssignal gegeben wird.

15. Verfahren nach einem der Ansprüche 13 oder 14, **dadurch gekennzeichnet, dass** außer den Signalen, die aus der Betätigungskraft auf die Betätigungselemente (2, 2') erzeugt wurden auch Signale weiterer Einrichtungen des Kraftfahrzeugs berücksichtigt werden.

16. Verfahren nach einem der Ansprüche 11 bis 15, **dadurch gekennzeichnet, dass** eine Kombinationseinheit (7), in der die aus den Betätigungskräften auf die beiden Betätigungselemente (2, 2') ermittelten Signale für den Beschleunigungs- oder Verzögerungswunsch miteinander verarbeitet werden, bei Nichtbetätigung eine Fahrerwunschbeschleunigung von Null ausgibt.

17. Verfahren nach einem der Ansprüche 11 bis 16, **dadurch gekennzeichnet, dass** bei Ermittlung einer Fahrerwunschbeschleunigung von Null die Geschwindigkeit des Kraftfahrzeugs konstant gehalten wird.

## Claims

1. Apparatus for acceleration and/or deceleration of a motor vehicle, comprising two actuation elements (2, 2'), the first actuation element (2) serving to accelerate the vehicle and the second actuation element (2') serving to decelerate the vehicle and both actuation elements (2, 2') operating without actuation displacement, **characterised in that** each of the two actuation element (2, 2') is designed to determine a driver's wish with respect to an acceleration or a deceleration of the motor vehicle on the basis of an actuating force exerted by the driver without actuation displacement on the respective actuation element (2, 2').

2. Apparatus according to claim 1, **characterised in that** the apparatus includes at least one combination unit (7) in which the signals for the acceleration or deceleration wish determined from the actuation forces on the two actuation elements (2, 2') are processed with one another.

3. Apparatus according to claim 2, **characterised in that** the combination unit (7) is an addition unit.

4. Apparatus according to either of claims 2 and 3, **characterised in that** the combination unit (7) is a prioritisation unit.

5. Apparatus according to any one of claims 1 to 4, **characterised in that** signal detection elements (3, 3') which are connected to a signal processing unit (4) are associated with the actuation elements (2, 2').

6. Apparatus according to claim 5, **characterised in that** the signal processing unit (4) includes the combination unit (7) and at least one signal processing device (5, 5', 6, 6') connected on the input side of the combination unit (7).

7. Apparatus according to any one of claims 1 to 6, **characterised in that** it includes a control unit (8) connected on the output side of the combination unit (7).

8. Apparatus according to claim 7, **characterised in that** the control unit (8) includes a speed controller (15), preferably a PI speed controller.

9. Apparatus according to either of claims 7 and 8, **characterised in that** the output of the combination unit (7) can serve as a reset condition for the controller (15).

10. Apparatus according to any one of claims 7 to 9, **characterised in that** the control unit (8) includes a logic unit (10) for determining the engine request and the brake request.

11. Method for adjusting the speed of a motor vehicle, comprising at least one actuation element (2, 2') for deceleration of the motor vehicle and at least one actuation element (2, 2') for acceleration of the motor vehicle, **characterised in that** an actuation force exerted by the driver without actuation displacement on the respective actuation element (2, 2') is detected for determining a driver's wish, a signal regarding the driver's wish with respect to acceleration or deceleration is generated therefrom and the signals relating to the driver's wishes are processed with one another.

12. Method according to claim 11, **characterised in that** the processing is a summation of the signals detected.

13. Method according to either of claims 11 and 12, **characterised in that**, if an acceleration signal is present, the presence of a deceleration signal is monitored in the processing.

14. Method according to claim 13, **characterised in that**, upon detection of the presence of a deceleration signal, the latter is given priority over the acceleration signal.

15. Method according to either of claims 13 and 14, **characterised in that**, apart from the signals that have been generated from the actuation force on the actuation elements (2, 2'), signals of further devices of the motor vehicle are also taken into account.

16. Method according to any one of claims 11 to 15, **characterised in that** a combination unit (7), in which the signals determined from the actuation forces on the two actuation elements (2, 2') for the acceleration wish or deceleration wish are processed with one another, outputs a driver's acceleration wish of zero upon non-actuation of said actuation elements (2, 2').

17. Method according to any one of claims 11 to 16, **characterised in that** the speed of the motor vehicle is maintained constant upon detection of a driver's acceleration wish of zero.

## Revendications

1. Dispositif d'accélération et / ou de décélération d'un véhicule automobile avec deux éléments de commande (2 ,2'), le premier élément de commande (2) servant à l'accélération et le second élément (2') à la décélération du véhicule automobile, et les deux éléments de commande (2 ,2') fonctionnant sans course,
**caractérisé en ce que**
chacun des deux éléments de commande (2, 2') étant conçu du fait d'une force de commande exercée sans course par un conducteur sur **l'élément de commande respectif (2, 2') pour déterminer un souhait** du conducteur relatif à une accélération ou une décélération du véhicule automobile.

2. Dispositif selon la revendication 1, **caractérisé en ce que** le dispositif comprend au moins une unité de combinaison (7) dans laquelle les signaux déterminés à partir des forces de commande exercées sur les deux éléments de commande (2, 2') pour le souhait d'accélération ou de décélération sont traités conjointement.

3. Dispositif selon la revendication 2, **caractérisé en ce que** l'unité de combinaison (7) représente une unité d'addition.

4. Dispositif selon l'une des revendications 2 ou 3, **caractérisé en ce que** l'unité de combinaison (7) représente une unité de classement par priorité.

5. Dispositif selon l'une des revendications 1 à 4, **caractérisé en ce que** des éléments de détermination des signaux (3, 3') sont affectés aux éléments de commande (2, 2') et sont raccordés à une unité de traitement des signaux (4).

6. Dispositif selon la revendication 5, **caractérisé en ce que** l'unité de traitement des signaux (4) comprend l'unité de combinaison (7) et au moins un élément de traitement des signaux (5, 5', 6, 6') monté en amont de l'unité de combinaison (7).

7. Dispositif selon l'une des revendications 1 à 6, **caractérisé en ce que** ce dernier comprend une unité de réglage (8) qui est montée en aval de l'unité de combinaison (7)

8. Dispositif selon la revendication 7, **caractérisé en ce que** l'unité de réglage (8) comprend un régulateur de vitesse (15), de préférence un régulateur de vitesse PI.

9. Dispositif selon l'une des revendications 7 ou 8, **caractérisé en ce que** la sortie de l'unité de combinaison (7) peut servir de condition de réinitialisation pour le régulateur (15).

10. Dispositif selon l'une des revendications 7 à 9, **caractérisé en ce que** l'unité de réglage (8) comprend une unité logique (10) pour la détermination de la demande du moteur et de la demande de freinage.

11. Procédé de réglage de la vitesse d'un véhicule automobile présentant au moins un élément de commande (2, 2') pour la décélération et au moins un élément de commande (2, 2') pour l'accélération du véhicule automobile
**caractérisé en ce que**,
pour la détermination d'un souhait du conducteur, il est déterminé une force de commande exercée sans course par un conducteur sur l'élément de commande respectif (2, 2'), à partir de là un signal sur le désir du conducteur par rapport à l'accélération ou la décélération est généré et les signaux relatifs aux souhaits du conducteur sont conjointement traités.

12. Procédé selon la revendication 11, **caractérisé en ce que** le traitement d'une totalisation des signaux déterminés est représenté.

13. Procédé selon l'une des revendications 11 ou 12, **caractérisé en ce que** lors du traitement, en cas de présence d'un signal d'accélération, il est vérifié s'il y a la présence d'un signal de décélération.

14. Procédé selon la revendication 13, **caractérisé en ce que**, en cas de reconnaissance de la présence d'un signal de décélération, il est donné la priorité à ce dernier par rapport à un signal d'accélération.

15. Procédé selon l'une des revendications 13 ou 14 **caractérisé en ce que**, en plus des signaux qui ont été générés à partir de la force de commande exercée sur les éléments de commande (2, 2'), il est également possible de prendre en considération des signaux appartenant à d'autres dispositifs du véhicule automobile.

16. Procédé selon l'une des revendications 11 à 15, **caractérisé en ce qu'**une unité de combinaison (7), dans laquelle les signaux pour le souhait d'accélération ou de décélération déterminé à partir des forces de commande exercées sur les deux éléments de commande (2, 2') sont traités conjointement, restitue en cas de non actionnement une accélération souhaitée par le conducteur s'élevant à zéro.

17. Procédé selon l'une des revendications 11 à 16, **caractérisé en ce que**, lors de la détermination d'une accélération souhaitée par le conducteur s'élevant à zéro, la vitesse du véhicule automobile est maintenue constante.
